(19) **Europäisches Patentamt / European Patent Office / Office européen des brevets**

(11) **EP 2 473 824 B1**

(12) **FASCICULE DE BREVET EUROPEEN**

(45) Date de publication et mention de la délivrance du brevet:
**10.07.2013 Bulletin 2013/28**

(21) Numéro de dépôt: **10747222.7**

(22) Date de dépôt: **30.08.2010**

(51) Int Cl.:
*G01J 3/02* (2006.01)     *G01J 3/45* (2006.01)
*G01J 3/453* (2006.01)

(86) Numéro de dépôt international:
**PCT/EP2010/062651**

(87) Numéro de publication internationale:
**WO 2011/026814 (10.03.2011 Gazette 2011/10)**

(54) **INTERFÉROMÈTRE À COMPENSATION DE CHAMP**

**FELDKOMPENSIERTES INTERFEROMETER**

**FIELD-COMPENSATED INTERFEROMETER**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **04.09.2009 FR 0956051**

(43) Date de publication de la demande:
**11.07.2012 Bulletin 2012/28**

(73) Titulaires:
- **Centre National d'Etudes Spatiales**
  **75001 Paris (FR)**
- **Thales**
  **92200 Neuilly Sur Seine (FR)**

(72) Inventeurs:
- **BUIL, Christian**
  **F-31320 Castanet (FR)**
- **BUFFET, Laurence**
  **F-31650 Saint Orens (FR)**
- **BELON, Bruno**
  **F-31400 Toulouse (FR)**
- **DEGRELLE, Cyril**
  **F-06210 Mandelieu (FR)**
- **BUISSET, Christophe**
  **F-06620 Bar Sur Loup (FR)**
- **SIMEONI, Denis**
  **F-06650 Le Rouret (FR)**

(74) Mandataire: **Regimbeau**
**20, rue de Chazelles**
**75847 Paris Cedex 17 (FR)**

(56) Documents cités:
**EP-A2- 0 957 346        US-A- 5 131 747**
**US-A1- 2003 103 209**

- **MONTILLA I ET AL: "Michelson wide-field stellar interferometry: principles and experimental verification" APPLIED OPTICS, OPTICAL SOCIETY OF AMERICA, US, vol. 44, no. 3, 20 janvier 2005 (2005-01-20), pages 328-336, XP007912694 ISSN: 0003-6935**

**Description**

DOMAINE TECHNIQUE GENERAL

L'invention concerne un interféromètre et un procédé d'interférométrie dans le domaine des interféromètres à Transformée de Fourier à deux miroirs. Plus précisément, l'invention concerne la compensation du champ dans ce type d'instrument.

ETAT DE L'ART

Les interféromètres à Transformée de Fourier à deux miroirs (également désignés selon l'expression anglo-saxonne « FTS », pour « Fourier Transform Spectrometer ») sont communément utilisés en interférométrie, et connaissent notamment des applications en spectrométrie, comme par exemple la spectrométrie infrarouge.

Dans ce type d'instrument, des faisceaux lumineux distincts, issus de la séparation d'un faisceau lumineux incident, parcourent des chemins optiques différents dans des portions de l'interféromètre, également appelées « bras » de l'interféromètre, le plus souvent au nombre de deux.

La recombinaison des faisceaux distincts permet alors d'obtenir un interférogramme, mesuré par un détecteur, résultant de la différence de marche optique entre lesdits faisceaux.

Une différence de marche variable est généralement créée en déplaçant dans les bras de l'interféromètre un ou plusieurs dispositifs optiques mécaniquement mobiles.

On connaît du document EP0957346 un interféromètre permettant de générer une différence de marche variable entre des rayons lumineux traversant ledit interféromètre, par translation d'un dispositif optique mécaniquement mobile.

US 5,131,747 décrit un interféromètre comprenant un dispositif optique constitué de prismes accolés l'un à l'autre.

L'article intitulé « Michelson wide-field stellar interferometry: principles and experimental versification », de Montilla et al. (20 Janvier 2005) décrit un interféromètre comprenant un miroir en escaliers pour l'introduction d'une différence de marche variable en fonction de l'angle d'incidence.

Enfin, US 2003/0103209 décrit un interféromètre à Transformée de Fourier.

Un critère fondamental pour examiner la performance d'un interféromètre est sa résolution spectrale, c'est-à-dire sa capacité à séparer sans ambiguïté deux éléments spectraux contigus.

La résolution spectrale est d'autant plus élevée que la différence de marche créée entre les bras de l'interféromètre est élevée. En particulier, la finesse spectrale est égale à l'inverse de la différence de marche créée entre les bras de l'interféromètre.

Néanmoins, l'augmentation de la différence de marche est soumise à certaines limitations dans les instruments de l'art antérieur.

Lorsque les faisceaux lumineux incidents présentent un angle de champ $\theta$ non nul par rapport à l'axe optique de l'interféromètre, résultant du champ angulaire de la scène observée (par exemple, une zone de la surface de la Terre), lesdits faisceaux vont parcourir un chemin optique de longueur différente par rapport aux faisceaux lumineux incidents au niveau de l'axe optique, qui présentent, eux, un angle de champ $\theta$ nul.

La différence de marche réelle $\delta$ est alors une fonction de l'angle de champ $\theta$. Dans un interféromètre de type Michelson, la différence de marche réelle $\delta$, variable en fonction de l'angle de champ $\theta$, s'écrit $\delta = \delta'\cos(\theta)$, où $\delta'$ est la différence de marche créée suivant l'axe optique par l'intermédiaire du dispositif optique mobile dans les bras de l'interféromètre, et $\theta$ est l'angle de champ.

En conséquence, chaque faisceau lumineux incident issu d'un point du champ produit son propre interférogramme, différent d'un autre faisceau lumineux, ce qui brouille l'interférogramme mesuré par le détecteur et diminue son contraste.

Plus la différence de marche $\delta'$ créée entre les bras de l'interféromètre par l'intermédiaire du dispositif optique mobile est grande, plus le contraste va diminuer avec le champ, jusqu'à s'annuler dans certains cas.

Ce phénomène est connu de l'homme du métier sous le nom d'auto-apodisation.

La résolution spectrale est donc limitée par l'ouverture angulaire de l'instrument, c'est-à-dire son champ de vue.

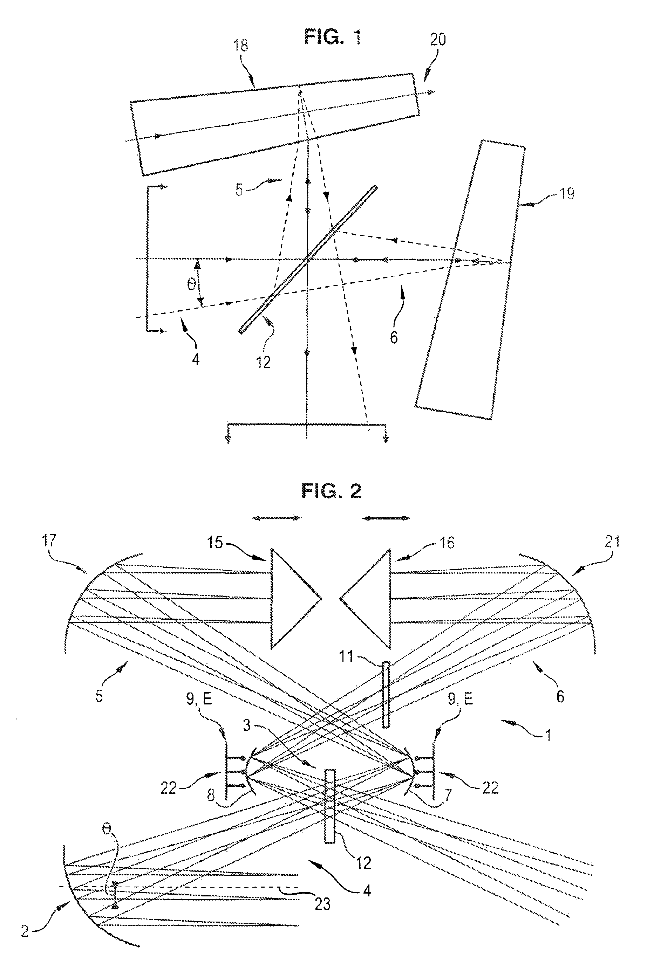

On a représenté en figure 1 (tirée de « *Chemical infrared fourier-transform spectroscopy* », Peter R. Griffiths, John Wiley, London, New York, Sydney and Toronto, 1975, p.127) un interféromètre selon l'art antérieur pour tenter de pallier aux problèmes précités, c'est-à-dire pour compenser la présence de champ, qui entraine une différence de marche non désirée.

L'interféromètre comprend une lame séparatrice semi-réfléchissante 12, apte à séparer le faisceau lumineux incident 4, présentant un angle de champ $\theta$ par rapport à un axe optique dudit interféromètre, vers deux bras 5,6 de l'interféromètre, comprenant chacun un prisme 18,19 dont une des surfaces est réflectrice. La différence de marche entre les deux bras 5,6 de l'interféromètre est obtenue en déplaçant l'un des prismes 18 selon l'axe 20. La compensation de champ est obtenue grâce à la distance sensiblement constante parcourue dans le prisme quelque soit l'angle de champ.

Un inconvénient de cette solution est qu'elle utilise des faisceaux parallèles ce qui nécessite pour la compensation de champ des prismes très grands, de la taille de la pupille d'entrée, accentuant l'encombrement de l'interféromètre.

Un autre inconvénient de cette solution est qu'elle souffre de problèmes de chromatisme dus à la traversée de prismes très épais par le faisceau lumineux.

Un autre inconvénient encore concerne le déplacement du prisme, lourd et encombrant, qui se fait sur de grandes distances (de l'ordre de 5 cm), ce qui pose des problèmes fondamentaux de positionnement et de maintien du prisme le long de l'axe de déplacement.

PRESENTATION DE L'INVENTION

L'invention propose de pallier au moins un de ces inconvénients.

A cet effet, l'invention propose un interféromètre à compensation de champ, comprenant un ensemble optique apte à diriger des faisceaux lumineux incidents présentant un angle de champ $\theta$ par rapport à un axe optique de l'interféromètre vers des bras de l'interféromètre, une lame séparatrice, les bras comprenant au moins un dispositif optique mécaniquement mobile pour la création d'une différence de marche optique variable entre des faisceaux issus de la séparation de chaque faisceau incident par l'intermédiaire de ladite lame séparatrice, ledit interféromètre étant caractérisé en ce qu'il comprend au moins un élément optique de compensation du champ, disposé dans l'un ou l'autre des plans focaux image de l'ensemble optique conjugués par rapport à la lame séparatrice, ledit élément comprenant au moins une surface courbée de manière à créer une différence de marche entre les faisceaux incidents présentant un angle de champ non nul et les faisceaux incidents présentant un angle de champ nul, la différence de marche ainsi créée permettant de compenser l'auto-apodisation résultant de l'angle de champ.

L'invention est avantageusement complétée par les caractéristiques suivantes, prises seules ou en une quelconque de leur combinaison techniquement possible :

- l'interféromètre comprend deux éléments optiques de compensation du champ disposés respectivement dans chacun des deux plans focaux image de l'ensemble optique conjugués par rapport à la lame séparatrice ;
- la surface de l'élément optique est courbe sur au moins une de ses méridiennes ;
- l'interféromètre comprend deux éléments optiques, l'un des éléments comprenant une surface courbe sur une première méridienne, l'autre des éléments comprenant une surface courbe sur une deuxième méridienne, la première et la deuxième méridienne étant orthogonales ;
- l'élément optique est un miroir, ledit miroir comprenant une surface courbe réfléchissante sur au moins une de ses méridiennes ;
- la surface courbe réfléchissante dudit miroir présente un profil mécanique continûment incurvé ;
- la surface courbe réfléchissante dudit miroir présente un profil mécanique composée d'un ensemble discret de surfaces planes réfléchissantes ;
- l'interféromètre comprend des moyens de rotation des surfaces planes réfléchissantes ;
- l'élément optique est un miroir mince et déformable par l'intermédiaire d'un système de déformation ;
- le système de déformation est un système piézo-électrique ;
- l'interféromètre comprend un outil de métrologie laser pour le contrôle du déplacement créé par les moyens de déplacement ou de la déformation créée par le système de déformation ;
- l'élément optique de compensation du champ est une lame de verre mince ;
- l'interféromètre comprend deux éléments optiques de compensation du champ : une lame de verre mince et la lame séparatrice, disposés au plan focal image de l'ensemble optique.

L'invention propose également un procédé d'interférométrie à compensation de champ dans un interféromètre dans lequel un ensemble optique dirige des faisceaux lumineux incidents vers les bras de l'interféromètre, le dispositif optique mécaniquement mobile est déplacé pour créer une différence de marche entre les faisceaux issus de la séparation de chaque faisceau incident, dont la recombinaison permet de mettre en oeuvre l'interférométrie, ledit procédé étant caractérisé en ce qu'il comprend l'étape selon laquelle les surfaces planes réfléchissantes du miroir sont déplacées en rotation simultanément au dispositif optique d'un angle compensant la différence de marche créée par le déplacement dudit dispositif optique.

L'invention propose enfin un procédé d'interférométrie à compensation de champ dans un interféromètre, dans lequel un ensemble optique dirige des faisceaux lumineux incidents vers les bras de l'interféromètre, un dispositif optique mécaniquement mobile est déplacé pour créer une différence de marche entre les faisceaux issus de la séparation de chaque faisceau incident, dont la recombinaison permet de mettre en oeuvre l'interférométrie, ledit procédé étant caractérisé en ce qu'il comprend l'étape selon laquelle la surface du miroir mince est déformée simultanément au dispositif

3

optique d'une distance compensant la différence de marche créée par le déplacement dudit dispositif optique.

L'invention présente de nombreux avantages.

Un avantage de l'invention est qu'elle permet de réduire et même d'annuler l'auto-apodisation.

Un autre avantage l'invention est qu'elle propose une solution achromatique.

Un autre avantage encore de l'invention est qu'elle permet de réduire la dimension de certains éléments optiques critiques de l'instrument à résolution spectrale donnée.

Un autre avantage encore de l'invention est qu'elle permet d'accroitre le champ de vue de l'instrument à résolution spectrale donnée.

Un autre avantage encore de l'invention est qu'elle permet d'accroitre l'efficacité générale de l'interféromètre, qui peut être définie comme le produit de la résolution spectrale par la luminosité.

Enfin, un autre avantage de l'invention est qu'elle met en oeuvre de faibles déplacements d'éléments optiques pour la compensation du champ.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, est un interféromètre selon l'art antérieur ;
- la figure 2 est une vue schématique d'un interféromètre à compensation de champ selon l'invention ;
- la figure 3 est une vue en coupe d'un miroir pour la compensation de champ ;
- la figure 4 est une vue schématique d'une autre mode de réalisation d'un interféromètre à compensation de champ selon l'invention.

## DESCRIPTION DETAILLEE

On a représenté en figure 2 un interféromètre 1 à compensation de champ selon l'invention.

L'interféromètre 1 comprend un ensemble 2 optique, apte à diriger les faisceaux lumineux incidents 4, issus de la scène à observer, vers des bras 5,6 de l'interféromètre 1 pour la création d'une différence de marche qui sera décrite ultérieurement.

Cet ensemble 2 optique est généralement un miroir sphérique, ou un miroir asphérique, ou un jeu de plusieurs miroirs de différents types, sur lesquels les faisceaux lumineux incidents 4 se réfléchissent.

Etant donné que la scène à observer par l'interféromètre 1 n'est en général pas un point ponctuel, mais une zone plus ou moins étendue, certains faisceaux lumineux incidents 4 présentent un angle de champ $\theta$ non nul par rapport à un axe optique 23 de l'interféromètre 1, comme cela est représenté en figure 2.

Les faisceaux lumineux incidents 4 qui sont parallèles à l'axe optique 23 de l'interféromètre 1 présentent, eux, un angle de champ $\theta$ égal à zéro.

Les faisceaux lumineux incidents 4, réfléchis par l'ensemble 2 optique, rencontrent alors une lame séparatrice semi-réfléchissante 12, qui sépare chaque faisceau lumineux incident 4 en deux faisceaux lumineux d'intensité quasi-identique.

Ce type de lame séparatrice peut par exemple être obtenu en déposant une couche fine d'un composé métallique (comme de l'aluminium) ou diélectrique à la surface d'une lame de verre.

La lame séparatrice 12 permet donc de séparer chaque faisceau lumineux incident 4 en deux faisceaux lumineux vers les bras 5,6 de l'interféromètre, l'un des bras 6 comprenant de manière classique une lame de verre mince 11, connue de l'homme du métier sous le nom de lame compensatrice.

Pour pouvoir créer un interférogramme, il est nécessaire que les faisceaux lumineux, issus de la séparation de chaque faisceau lumineux incident 4, parcourent un chemin optique différent dans chaque bras 5,6 de l'interféromètre.

A cet effet, les bras 5,6 comprennent au moins un dispositif 15,16 optique mécaniquement mobile, dont le déplacement est indiqué par des flèches en figure 2, permettant de créer une différence de marche optique variable entre les faisceaux issus de la séparation de chaque faisceau 4 incident par la lame séparatrice semi-réfléchissante 12.

Divers types de dispositifs optiques mécaniquement mobiles peuvent être utilisés pour la création de la différence de marche variable.

En figure 2, on a représenté une solution possible avec deux dispositifs 15,16 optiques mécaniquement mobiles. Dans cette solution, chaque bras 5,6 comprend un coin de cube 15,16 rétro-réflecteur pouvant être déplacé sur un axe parallèle à l'axe optique 23 de l'interféromètre 1. Les faisceaux lumineux sont collimatés vers les coins de cube 15,16 par l'intermédiaire de miroirs 17,21. Chaque coin de cube 15,16 est mobile sur l'axe optique 23 selon deux sens de déplacement, ce qui entraine selon le sens de déplacement une avance ou un retard en terme de différence de marche.

Les coins de cube rétro-réflecteur 15,16 peuvent être déplacés en utilisant deux mécanismes indépendants, ou en utilisant un seul mécanisme avec un mouvement pendulaire.

Il est bien sûr possible de mettre en oeuvre une solution où un seul dispositif optique mécaniquement mobile est commun aux deux bras 5, 6 de l'interféromètre 1. On peut par exemple solidariser les deux coins de cube 15,16 en les plaçant côte à côte de manière « tête-bêche », ce qui permet de ne déplacer qu'un seul dispositif optique mécaniquement mobile.

Une autre solution consiste à utiliser un ou plusieurs miroirs mobiles dans les bras de l'interféromètre 1.

La présence d'au moins un dispositif 15,16 mécaniquement mobile permet donc de créer une différence de marche optique δ, que l'on peut faire varier en déplaçant le dispositif 15,16. Le dispositif mécaniquement mobile 15,16 est typiquement déplacé sur une distance de quelques millimètres à quelques centimètres, afin de créer une différence de marche optique δ dans le même intervalle.

La recombinaison des faisceaux lumineux précédemment séparés par la lame séparatrice semi-réfléchissante 12 et présentant une différence de marche permet de créer l'interférogramme, dont l'intensité est modulée périodiquement en fonction de la différence de marche créée. Le plus souvent, et comme cela est représente en figure 2, la lame séparatrice semi-réfléchissante 12 sert aussi pour la recombinaison des faisceaux.

Comme explicité précédemment, en l'absence d'un élément optique permettant de compenser la différence de marche due à l'angle de champ θ par rapport à l'axe optique 23 de l'interféromètre 1, c'est-à-dire en présence d'auto-apodisation, les faisceaux incidents présentant un angle de champ θ non nul et les faisceaux incidents présentant un angle de champ θ nul vont présenter une différence de marche différente, variable en fonction de θ.

Ainsi, en l'absence de compensation de champ, la différence de marche réelle δ créée dans l'interféromètre 1 s'écrit :

$$\delta = \delta' \cos(\theta)$$

La présence de l'angle de champ θ introduit donc une différence de marche exprimée par le terme « cos θ ».

Pour compenser la différence de marche résultant de l'angle de champ θ, l'interféromètre 1 à compensation de champ selon l'invention comprend notamment :

- au moins un élément E optique de compensation du champ, disposé dans l'un ou l'autre des plans focaux image de l'ensemble 2 optique conjugués par rapport à la lame séparatrice 12, sur lequel l'ensemble 2 optique forme l'image de la scène à observer,
- ledit élément E comprenant au moins une surface 9 courbée pour créer une différence de marche entre les faisceaux incidents présentant un angle de champ θ non nul et les faisceaux incidents présentant un angle de champ θ nul, compensant la différence de marche résultant de l'angle de champ θ.

Les plans focaux images de l'ensemble 2 optique dans lesquels sont disposés l'élément optique E sont conjugués par rapport à la lame séparatrice, ce qui signifie que ces plans focaux sont images l'un de l'autre par rapport à la lame séparatrice, comme cela est représenté en figure 2.

Dans un mode de réalisation avantageux de l'invention, et comme cela sera décrit ci-après, l'interféromètre 1 comprend deux éléments E optiques de compensation du champ disposés respectivement dans chacun des deux plans focaux image de l'ensemble 2 optique conjugués par rapport à la lame séparatrice 12. L'ensemble 2 optique forme donc l'image de la scène à observer sur chacun de ces deux éléments E optiques de compensation du champ.

Dans un mode de réalisation de l'invention, l'élément E optique de compensation du champ est un miroir 7,8 réfléchissant disposé sur l'un des plans focaux images de l'ensemble 2 optique conjugués par rapport à la lame séparatrice 12.

Le miroir 7,8 comprend une surface 9 réfléchissante courbée sur au moins une de ses méridiennes 13, afin de créer une différence de marche compensant la différence de marche due à l'angle de champ θ.

Ainsi, la courbure de la surface 9 réfléchissante est choisie pour introduire une différence de marche de compensation θ_E qui s'écrit :

$$\delta_E = \delta_0(1 - \cos(\theta))$$

Dans cette équation, δ_0 est un paramètre libre, qui dépend de la courbure que l'on donne à la surface 9 réfléchissante du miroir 7,8.

En conséquence, grâce au miroir 7,8 assurant la compensation du champ, la différence de marche réelle δ créée dans l'interféromètre 1 s'écrit à présent :

$$\delta = \delta'\cos(\theta) + \delta_0(1-\cos(\theta)) \Leftrightarrow \delta = \delta_0 + (\delta'-\delta_0)\cos(\theta)$$

La compensation du champ est totale lorsque le dispositif 15,16 optique mécaniquement mobile est déplacé pour créer une différence de marche $\delta'$ égale à $\delta_0$, puisque, dans ce cas, la différence de marche réelle ne dépend plus de l'angle de champ $\theta$. Le phénomène auto-apodisation est alors annulé.

Pour des différences de marche $\delta'$ différentes de $\delta_0$, la compensation du champ est également réalisée, puisque le terme « $\cos(\theta)$ » est modulé par la différence « $\delta'$-$\delta_0$ ». Dans ce cas, l'on réduit le phénomène d'auto-apodisation.

Le choix de la valeur $\delta_0$ correspond au choix d'une différence de marche privilégiée $\delta_0$, pour laquelle la compensation du champ est totale.

Comme la résolution spectrale croît avec la différence de marche créée par le dispositif optique 15,16 mécaniquement mobile, il est avantageux de choisir une valeur élevée pour $\delta_0$. ce qui permet d'accroitre la résolution spectrale.

Selon un autre aspect de l'invention, il est possible d'utiliser un élément E optique de compensation du champ dont la surface 9 est modifiée « en temps réel » pour introduire la différence de marche $\delta_E(\theta,\delta') = \delta'(1-\cos(\theta))$, cette solution étant décrite ultérieurement. Dans ce cas, l'élément E optique à compensation du champ permet de compenser totalement le champ, c'est-à-dire d'annuler l'auto-apodisation, pour toutes les différences de marche $\delta$ créées par l'intermédiaire du dispositif 15,16 mécaniquement mobile.

La courbure de la surface 9 réfléchissante sur au moins une des méridiennes 13 du miroir 7,8 peut être réalisée en usinant la surface 9 du miroir 7,8 de manière continue. Dans ce cas, la surface 9 du miroir 5,6 possède un profil mécanique continûment incurvé sur au moins une de ses méridiennes 13, dont la courbure décrit la fonction $\delta_E = \delta_0(1-\cos(\theta))$.

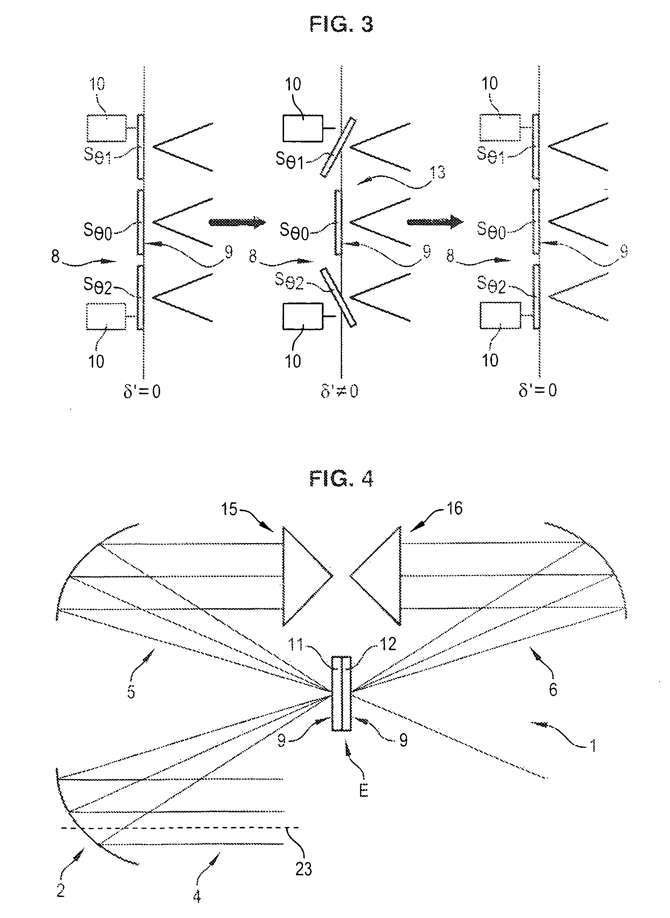

Une autre solution, représentée en figure 3, consiste à utiliser une surface 9 courbe réfléchissante comportant un profil mécanique composée d'un ensemble discret de surfaces planes réfléchissantes ($S_{\theta 0}, S_{\theta 1}, S_{\theta 2}, ...$).

Ainsi, les faisceaux lumineux incidents 4 présentant un angle de champ proche de la valeur $\theta_1$ vont être dirigés par l'ensemble 2 optique sur la surface $\theta_{01}$. Les faisceaux lumineux incidents 4 présentant un angle de champ $\theta_0$ nul ou quasi nul, c'est-à-dire les faisceaux lumineux 4 proches de l'axe optique de l'interféromètre 1, vont être dirigés sur la surface $S_{\theta 0}$.

La surface $S_{\theta 1}$ est inclinée par rapport à la surface $S_{\theta 0}$ pour créer une différence de marche de compensation $\delta_E(\theta_1)$, ce qui permet de compenser la différence de marche due à l'angle de champ $\theta_1$ non nul.

Il en est de même pour les faisceaux lumineux incidents 4 présentant un angle de champ proche de la valeur $\theta_2$, qui vont être dirigés sur la surface $S_{\theta 2}$ par l'ensemble 2 optique, qui est inclinée par rapport à la surface $S_{\theta 0}$.

A titre d'exemple, l'utilisation d'un profil mécanique composé d'un ensemble discret de surfaces planes réfléchissantes ($S_{\theta 0}, S_{\theta 1}, S_{\theta 2}, ...$) ne permet pas de décrire exactement la fonction $\delta_E = \delta_0(1-\cos(\theta))$, mais permet déjà d'obtenir une compensation du champ satisfaisante, dans de nombreuses situations.

En pratique, l'utilisation de trois surfaces planes réfléchissantes ($S_{\theta 0}, S_{\theta 1}, S_{\theta 2}$) est suffisante pour compenser le champ de manière satisfaisante, c'est-à-dire réduire l'auto-apodisation.

Par ailleurs, comme les faisceaux lumineux incidents 4 peuvent présenter un angle de champ $\theta$ par rapport à l'axe optique de l'interféromètre 1 dans toutes les directions de l'espace, décrivant ainsi un cône de révolution d'angle au sommet égal à $\theta$ autour de l'axe optique 23 de l'interféromètre 1, les faisceaux lumineux réfléchis par l'ensemble optique 2 vont être décalés linéairement sur la surface 9 du miroir 7,8. Ce décalage s'opère notamment sur la surface 9 selon les deux directions horizontales et verticales de ladite surface 9.

Pour pouvoir compenser le champ dans toutes les directions de l'espace, le miroir 7,8 présente avantageusement une surface 9 courbée sur deux de ses méridiennes, orthogonales entre elles. La courbure peut être réalisée en utilisant un profil mécanique incurvé de manière continue ou discrète, comme explicitée auparavant.

Une autre solution avantageuse consiste à utiliser deux miroirs 7,8, disposés chacun dans un des bras 5,6 de l'interféromètre, comme illustré en figure 2. Les deux miroirs 7,8 sont disposés respectivement dans chacun des deux plans focaux images de l'ensemble 2 optique conjugués par rapport à la lame séparatrice 12.

Dans ce cas, il est avantageux d'utiliser l'un des deux miroirs 7 comprenant une surface 9 courbe sur une première méridienne, l'autre des deux miroirs 8 comprenant une surface 9 courbe sur une deuxième méridienne, la première et la deuxième méridienne étant orthogonales.

Il est bien évidemment possible d'utiliser deux miroirs 7,8 présentant chacun une surface 9 incurvée sur chacune des deux méridiennes.

L'utilisation d'un élément optique E à compensation de champ étant un miroir 7,8 réfléchissant présente l'avantage de proposer une solution achromatique. En effet, la compensation de champ s'opère par réflexion des faisceaux lumineux incidents 4 sur le miroir 7,8 et non pas, comme certaines solutions de l'art antérieur, par transmission sur de longues distances dans des milieux d'indices différents.

Par ailleurs, dans l'interféromètre 1 selon l'invention, l'élément E optique de compensation du champ, qui est par exemple le miroir 7,8, est disposé au niveau du plan focal image de l'ensemble 2 optique, c'est pourquoi on fait converger les faisceaux lumineux incidents 4 réfléchis par ledit ensemble 2 vers l'élément E optique de compensation du champ.

La disposition de l'élément E optique de compensation du champ peut présenter une certaine marge d'erreur de positionnement par rapport au plan focal image de l'ensemble 2 optique.

Cette configuration est très avantageuse, puisque le fait -que les faisceaux lumineux 4 soient dirigés de manière convergente vers l'élément E optique de compensation du champ permet de réduire la taille dudit élément E optique de compensation du champ.

En effet, la compensation de champ s'effectue alors sur des faisceaux convergents, plus concentrés que des faisceaux collimatés parallèles.

Il est ainsi possible d'utiliser comme élément E optique de compensation de champ un miroir 7,8 de dimension compacte. Dans un interféromètre 1 selon l'invention, le miroir peut par exemple présenter une taille de quelques millimètres à quelques dizaines de millimètres.

Un autre avantage de l'invention est qu'elle permet d'augmenter l'angle de champ θ acceptable dans l'interféromètre, ce qui permet d'obtenir un instrument à grand champ de vue, sans réduire la résolution spectrale.

De même, il est possible d'augmenter l'ouverture angulaire au niveau du dispositif 15,16 mécaniquement mobile, comme par exemple le cube rétro-réflecteur, ce qui permet de réduire la taille linéaire dudit dispositif, et plus généralement de diminuer l'encombrement de l'interféromètre.

Dans un mode de réalisation de l'invention, on utilise un élément E optique à compensation du champ permettant de compenser totalement le champ, c'est-à-dire d'annuler l'auto-apodisation, pour toutes les différences de marche δ créées par l'intermédiaire du dispositif 15,16 mécaniquement mobile.

L'annulation totale de l'auto-apodisation pour toutes les différences de marche nécessite l'utilisation d'un élément E optique à compensation du champ permettant d'obtenir une différence de marche de compensation variable non seulement en fonction de l'angle de champ θ, via l'utilisation d'une surface 9 courbée et telle que décrite auparavant, mais également variable en fonction de la différence de marche δ'. Cet élément E optique doit donc introduire la différence de marche $\delta_E$ variable avec δ':

$$\delta_E(\theta, \delta') = \delta'(1 - \cos(\theta))$$

Avec un tel élément E optique, la différence de marche réelle δ créée dans l'interféromètre 1 ne dépend plus de l'angle de champ θ, et s'écrit :

$$\delta = \delta'\cos(\theta) + \delta'(1 - \cos(\theta)) \Leftrightarrow \delta = \delta'$$

Pour ce faire, il est nécessaire de déplacer ou de déformer la surface de l'élément E optique en temps réel, c'est à dire simultanément au déplacement du dispositif 15,16 optique mécaniquement mobile.

Dans un mode de réalisation de l'invention, et comme illustré en figure 3, on utilise à cet effet des moyens 10 de rotation des surfaces planes réfléchissantes $(S_{\theta1}, S_{\theta2},...)$ du miroir 7,8, afin de créer une différence de marche de compensation également variable en fonction de δ'.

Les moyens 10 de rotation font pivoter les surfaces planes réfléchissantes $(S_{\theta1}, S_{\theta2},...)$. Le pivotement peut se faire autour de n'importe quel point de chacune desdites surfaces planes réfléchissantes, comme par exemple le centre de ladite surface, ou son extrémité.

Chacune des surfaces planes réfléchissantes $(S_{\theta1}, S_{\theta2},...)$ définit autant de portions élémentaires du champ image. On applique à chacune desdites surfaces $(S_{\theta1}, S_{\theta2}....)$ une rotation dont l'amplitude est propre à chacune desdites surfaces, afin de réaliser une compensation optimale de la variation de la différence de marche en fonction de δ' et θ.

Dans la configuration particulière illustrée sur la figure 3, la surface $S_{\theta0}$ est située au centre du champ image et n'a donc pas besoin d'être déplacée, étant donné qu'elle correspond à un angle de champ nul ou quasi nul.

Dans un procédé d'interférométrie à compensation de champ selon l'invention, les surfaces planes réfléchissantes $(S_{\theta1}, S_{\theta2},...)$ du miroir 7,8 sont déplacées en rotation simultanément au dispositif 15,16 optique d'un angle permettant de compenser la différence de marche créée par le déplacement du dispositif 15,16 optique. Ainsi, le miroir 7,8 introduit pour chaque différence de marche δ' créée par le dispositif 15,16 optique une différence de marche de compensation approximant au mieux la fonction $\delta_E = \delta'(1 - \cos(\theta))$.

La rotation s'opère par l'intermédiaire des moyens 10 de rotation, qui sont représentés de manière très schématique sous la forme de blocs fonctionnels sur la figure 3.

Plus généralement, il est possible d'utiliser d'autres moyens de déplacement, comme des moyens de translation des surfaces planes réfléchissantes.

Dans un autre mode de réalisation de l'invention, on utilise un miroir 7,8 mince et déformable par l'intermédiaire d'un système 22 de déformation, comme illustré en figure 2.

Ce type de miroir peut par exemple être déformé par l'intermédiaire d'un système 22 piézo-électrique ou d'un système 22 magnétique, dont l'action mécanique et/ou électrique et/ou magnétique permet d'obtenir la déformation désirée de la surface 9 réfléchissante du miroir 7,8. Tout autre système 22 de déformation connu de l'homme du métier peut être utilisé.

Dans un procédé d'interférométrie à compensation de champ selon l'invention, la surface 9 du miroir mince 7,8 est déformée simultanément au déplacement du dispositif 15,16 optique, d'une distance compensant la différence de marche créée par le déplacement dudit dispositif 15,16 optique. Ainsi, le miroir 7,8 introduit pour chaque différence de marche 5' créée par le dispositif 15,16 optique une différence de marche de compensation $\delta_E = \delta'(1 - \cos(\theta))$. Etant donné que l'on peut contrôler la déformation de chaque point du miroir déformable, il est possible d'obtenir une différence de marche de compensation $\delta_E$ très précise.

D'autres solutions sont bien sûr envisageables afin de déplacer la ou les surfaces du miroir 7,8 en fonction de la différence de marche $\delta'$ créée par le déplacement du dispositif 15,16 optique.

Avantageusement, on contrôle le déplacement des surfaces $(S_{\theta1}, S_{\theta2},...)$ du miroir 7,8, ou la déformation de la surface 9 du miroir 7,8 déformable, par l'intermédiaire d'un outil de métrologie laser. Ceci permet de vérifier que l'on introduit bien la différence de marche de compensation $\delta_E$ désirée.

Il est clair que dans le cas où les moyens 10 de rotation ou le système 22 de déformation ne sont pas utilisés, on retrouve le mode de réalisation décrit précédemment, dans lequel l'élément E optique à compensation du champ, comme par exemple le miroir 7,8, est immobile et introduit une différence de marche de compensation $\delta_E = \delta_0(1 - \cos(\theta))$, où $\delta_0$ a une valeur fixée. En utilisant les moyens 10 de rotation ou le système 22 de déformation, il est alors possible d'assigner la valeur que l'on souhaite au paramètre $\delta_0$.

Le déplacement ou la déformation en temps réel de la ou les surfaces de l'élément optique E à compensation du champ dans l'interféromètre 1 selon l'invention présente de nombreux avantages, outre ceux déjà cités dans le cadre du mode de réalisation avec un élément E immobile.

Un avantage de l'invention est qu'elle permet de compenser totalement le champ, c'est à dire d'annuler totalement l'auto-apodisation, quelques soient les différences de marche ô'. L'invention permet de faire disparaître la contrainte classique des interféromètres, et plus généralement des instruments optiques, qui associent à une résolution spectrale donnée une valeur d'angle de champ maximum acceptable, et inversement.

Grâce à l'invention, la résolution spectrale de l'interféromètre n'est plus limitée que par la différence de marche $\delta'$ pouvant être créée par le déplacement du dispositif 15,16 optique, ce qui est très avantageux.

La compensation totale du champ réalisée par l'invention permet donc d'utiliser des interféromètres ayant un champ de vue acceptable très grand, tout en conservant une forte résolution spectrale.

De plus, étant donné que l'on peut augmenter le champ de vue sans diminuer la résolution spectrale, ceci permet d'augmenter la luminosité, qui dépend du flux lumineux incident et donc du champ de vue, ce qui accroit le produit entre la résolution spectrale et la luminosité. Comme le produit de la résolution spectrale par la luminosité définit l'efficacité générale de l'interféromètre, l'invention permet donc d'accroitre l'efficacité dudit interféromètre.

Il a été mentionné dans le mode de réalisation utilisant un élément E optique à compensation du champ immobile, que l'invention permettait d'augmenter l'ouverture angulaire au niveau du dispositif 15,16 mécaniquement mobile, comme par exemple le cube rétro-réflecteur, ce qui peut permettre la réduction de la taille linéaire dudit dispositif, et l'encombrement de l'interféromètre. La compensation totale du champ quelque soit la différence de marche $\delta'$ pouvant être créée par le déplacement du dispositif 15,16 optique permet de réduire davantage la taille dudit dispositif, et donc l'encombrement de l'interféromètre.

Un autre avantage de l'invention est qu'elle nécessite une rotation faible des surfaces $(S_{\theta1}, S_{\theta2},...)$ de l'élément E optique à compensation du champ, par l'intermédiaire des moyens 10 de rotation. L'ordre de grandeur de la rotation à appliquer est de quelques milliradians pour les applications courantes et typiques.

On a représenté en figure 4 une variante du mode de réalisation de l'invention utilisant un élément E optique à compensation du champ immobile, dans laquelle l'élément E optique à compensation du champ est une lame de verre mince.

La lame de verre mince 11 est disposée au plan focal image de l'ensemble 2 optique. Au moins une surface 9 externe de la lame de verre mince 11 est usinée de manière courbe, afin de créer une différence de marche compensant la différence de marche due à l'angle de champ $\theta$.

La compensation de champ se fait dans ce mode de réalisation grâce à l'épaisseur variable de la lame de verre mince 11 qui est traversée par les faisceaux lumineux 4 réfléchis par l'ensemble 2 optique, ce qui permet d'introduire une différence de marche de compensation $\delta_E$.

Ainsi, la courbure de la surface 9 externe de la lame de verre mince 11 est choisie pour introduire une différence de marche de compensation $\delta_E$ qui s'écrit, comme déjà explicité auparavant :

$$\delta_E = \delta_0 (1 - \cos(\theta))$$

Le rayon de courbure à choisir pour la lame de verre mince 11 est grand, ce qui implique que les problèmes de chromatisme sont négligeables. Le rayon de courbure est typiquement de l'ordre de plusieurs mètres.

La lame de verre mince 11 peut présenter avantageusement une surface 9 courbée sur deux de ses méridiennes, orthogonales entre elles.

Comme explicité dans le premier mode de réalisation, le positionnement de la lame de verre mince 11 au niveau du plan focal image de l'ensemble 2 optique permet de réduire la taille de ladite lame 11, puisque les faisceaux lumineux 4 y convergent. Ainsi, la taille de la lame 11 est typiquement comprise entre 60 et 80 mm, ce qui est très compact.

En variante, il est possible d'utiliser comme élément optique E de compensation du champ la lame de séparation 12, de type semi-réfléchissante, disposée au plan focal image de l'ensemble 2 optique. Cette lame de séparation 12 diffère de la lame de verre mince 11 par le fait qu'on a déposé sur ladite lame 12 un composé métallique ou diélectrique.

La lame de séparation 12 est usinée pour présenter au moins une surface 9 externe courbée pour compenser le champ.

La lame de séparation 12 peut présenter avantageusement une surface 9 courbée sur deux de ses méridiennes, orthogonales entre elles.

Dans une autre variante encore, l'interféromètre 1 comprend deux éléments optiques E de compensation du champ, à savoir la lame de verre mince 11 et la lame de séparation 12, qui sont regroupées et disposées au niveau du plan focal image de l'ensemble 2 optique. Dans ce cas les plans focaux images de l'ensemble 2 optique conjugués par rapport à ladite lame séparatrice 12 sont confondus, et on vient y disposer la lame de verre mince 11 et la lame de séparation 12.

Dans ce cas, il est avantageux d'utiliser l'une des deux lames 11 comprenant une surface 9 courbe sur une première méridienne, l'autre des deux lames 12 comprenant une surface 9 courbe sur une deuxième méridienne, la première et la deuxième méridienne étant orthogonales.

L'avantage de la configuration utilisant une ou plusieurs lames comme élément E optique de compensation du champ est que l'interféromètre 1 obtenu est compact. En effet, les lames sont de tailles réduites. De plus, dans cette configuration, on diminue le nombre d'éléments optiques à utiliser dans l'interféromètre, et donc son encombrement.

L'interféromètre 1 selon l'invention trouve de nombreuses applications dans l'industrie, la recherche fondamentale ou appliquée, ou tout autre domaine nécessitant un interféromètre tel que décrit précédemment.

L'interféromètre 1 selon l'invention peut par exemple être utilisé dans le cadre de missions spatiales d'observation de la Terre, basées notamment sur des techniques de spectrométrie infrarouge. Dans ce cas, l'interféromètre 1 est embarqué sur un satellite d'observation de la Terre. L'instrument selon l'invention est compact, ce qui est avantageux pour l'embarquement sur un satellite. Par ailleurs, il présente un grand angle de champ acceptable et une résolution spectrale importante, ce qui permet d'obtenir de très bonnes performances instrumentales, compatibles avec les exigences des missions d'observations de la Terre.

**Revendications**

1. Interféromètre (1) à compensation de champ, comprenant

   un ensemble (2) optique apte à diriger des faisceaux lumineux incidents (4) présentant un angle de champ $\theta$ par rapport à un axe optique de l'interféromètre (1) vers des bras (5,6) de l'interféromètre,
   une lame séparatrice (12),
   les bras (5,6) comprenant au moins un dispositif (15,16) optique mécaniquement mobile pour la création d'une différence de marche-optique variable entre des faisceaux issus de la séparation de chaque faisceau (4) incident par l'intermédiaire de ladite lame séparatrice (12),
   ledit interféromètre (1) étant **caractérisé en ce qu'**il comprend :
   au moins un élément (E) optique de compensation du champ, disposé dans l'un ou l'autre des plans focaux image de l'ensemble (2) optique conjugués par rapport à la lame séparatrice (12),
   ledit élément (E) comprenant au moins une surface (9) courbée de manière à créer une différence de marche entre les faisceaux incidents présentant un angle de champ non nul et les faisceaux incidents présentant un angle de champ nul, la différence de marche ainsi créée permettant de compenser l'auto-apodisation résultant de l'angle de champ.

2. Interféromètre selon la revendication 1, comprenant deux éléments (E) optiques de compensation du champ disposés respectivement dans chacun des deux plans focaux image de l'ensemble (2) optique conjugués par rapport à la lame séparatrice (12).

3. Interféromètre selon l'une des revendications 1 ou 2, dans lequel la surface (9) de l'élément (E) optique est courbe sur au moins une de ses méridiennes (13).

4. Interféromètre selon l'une des revendications 1 à 3, comprenant deux éléments (E) optiques,

l'un des éléments comprenant une surface (9) courbe sur une première méridienne,
l'autre des éléments comprenant une surface (9) courbe sur une deuxième méridienne,
la première et la deuxième méridienne étant orthogonales.

5. Interféromètre selon l'une des revendications 1 à 4, dans lequel l'élément (E) est un miroir (7,8), ledit miroir (7,8) comprenant une surface (9) courbe réfléchissante sur au moins une de ses méridiennes (13).

6. Interféromètre selon la revendication 5, dans lequel la surface (9) courbe réfléchissante présente un profil mécanique continûment incurvé.

7. Interféromètre selon la revendication 5, dans lequel la surface (9) courbe réfléchissante présente un profil mécanique composée d'un ensemble discret de surfaces planes réfléchissantes ($S_{\theta 1}, S_{\theta 1}, S_{\theta 2},...$).

8. Interféromètre selon la revendication 7, comportant des moyens (10) de rotation des surfaces planes réfléchissantes ($S_{\theta 0}, S_{\theta 1}, S_{\theta 2},...$).

9. Interféromètre selon l'une des revendications 1 à 6, dans lequel l'élément (E) est un miroir (7,8) mince et déformable par l'intermédiaire d'un système (22) de déformation.

10. Interféromètre selon la revendication 9, dans lequel le système (22) de déformation est un système piézo-électrique.

11. Interféromètre selon l'une des revendications 7 à 10, comprenant un outil de métrologie laser pour le contrôle du déplacement créé par les moyens (10) de déplacement ou de la déformation créée par le système (22) de déformation.

12. Interféromètre selon l'une des revendications 1 à 3, dans lequel l'élément (E) optique de compensation du champ est une lame de verre mince (11).

13. Interféromètre selon l'une des revendications 1 à 4, dans lequel l'interféromètre (1) comprend deux éléments (E) optiques de compensation du champ : une lame de verre mince (11) et la lame séparatrice (12), disposés au plan focal image de l'ensemble 2 optique.

14. Procédé d'interférométrie à compensation de champ dans un interféromètre (1) selon l'une des revendications 7, 8 ou 11, dans lequel :

l'ensemble (2) optique dirige les faisceaux lumineux incidents (4) vers les bras (5,6) de l'interféromètre,
le dispositif (15,16) optique mécaniquement mobile est déplacé pour créer une différence de marche entre les faisceaux issus de la séparation de chaque faisceau (4) incident, dont la recombinaison permet de mettre en oeuvre l'interférométrie,
ledit procédé étant **caractérisé en ce qu'**il comprend l'étape selon laquelle :

les surfaces planes réfléchissantes ($S_{\theta 1}, S_{\theta 2},...$) du miroir (7,8) sont déplacées en rotation simultanément au dispositif (15,16) optique d'un angle compensant la différence de marche créée par le déplacement dudit dispositif (15,16) optique.

15. Procédé d'interférométrie à compensation de champ dans un interféromètre (1) selon l'une des revendications 8 à 10, dans lequel :

l'ensemble (2) optique dirige les faisceaux lumineux incidents (4) vers les bras (5,6) de l'interféromètre,
le dispositif (15,16) optique mécaniquement mobile est déplacé pour créer une différence de marche entre les faisceaux issus de la séparation de chaque faisceau (4) incident, dont la recombinaison permet de mettre en oeuvre l'interférométrie,
ledit procédé étant **caractérisé en ce qu'**il comprend l'étape selon laquelle :

la surface (9) du miroir (7,8) mince est déformée simultanément au dispositif (15,16) optique d'une distance compensant la différence de marche créée par le déplacement dudit dispositif (15,16) optique.


**Patentansprüche**

1.  Feldkompensiertes Interferometer (1), Folgendes umfassend:

    eine optische Einheit (2), die dafür eingerichtet ist, einfallende Lichtstrahlen (4), die zu einer optischen Achse des Interferometers (1) einen Feldwinkel $\Theta$ haben, in Richtung von Armen (5, 6) des Interferometers zu lenken,
    eine Strahlteilerplatte (12),
    wobei die Arme (5, 6) wenigstens eine optische Vorrichtung (15, 16) umfassen, die mechanisch beweglich ist, um hierdurch einen veränderlichen optischen Wegunterschied zu erzeugen, und dies zwischen Strahlen, die aus der Teilung jedes einfallenden Strahls (4) mittels der Strahlteilerplatte (12) kommen,
    wobei das Interferometer (1) **dadurch gekennzeichnet ist, dass** es Folgendes umfasst:

    wenigstens ein optisches Element (E) zur Kompensation des Felds, das in der einen oder der anderen der fokalen Bildebenen der optischen Einheit (2) angeordnet ist, die konjugiert zur Strahlteilerplatte (12) liegen, wobei das Element (E) wenigstens eine Oberfläche (9) hat, die derart gekrümmt ist, dass sie zwischen den einfallenden Strahlen, die einen von null verschiedenen Feldwinkel haben, und den einfallenden Strahlen, die einen Feldwinkel von null haben, einen Wegunterschied erzeugt, wobei der so erzeugte Wegunterschied es gestattet, die aus dem Feldwinkel resultierende Autoapodisation zu kompensieren.

2.  Interferometer nach Anspruch 1, das zwei optische Elemente (E) zur Kompensation des Felds umfasst, die jeweils in jeder der beiden fokalen Bildebenen der optischen Einheit (2) angeordnet sind, die konjugiert zur Strahlteilerplatte (12) liegen.

3.  Interferometer nach einem der Ansprüche 1 oder 2, bei dem die Oberfläche (9) des optischen Elements (E) auf wenigstens einem seiner Meridiane (13) gekrümmt ist.

4.  Interferometer nach einem der Ansprüche 1 bis 3, das zwei optische Elemente (E) umfasst,

    wobei das eine der Elemente eine Oberfläche (9) umfasst, die auf einem ersten Meridian gekrümmt ist,
    das andere der Elemente eine Oberfläche (9) umfasst, die auf einem zweiten Meridian gekrümmt ist,
    und der erste und zweite Meridian zueinander orthogonal sind.

5.  Interferometer nach einem der Ansprüche 1 bis 4, bei dem das Element (E) ein Spiegel (7, 8) ist, wobei der Spiegel (7, 8) auf wenigstens einem seiner Meridiane (13) eine reflektierende gekrümmte Oberfläche (9) umfasst.

6.  Interferometer nach Anspruch 5, bei dem die reflektierende gekrümmte Oberfläche (9) ein mechanisches Profil hat, das kontinuierlich gekrümmt ist.

7.  Interferometer nach Anspruch 5, bei dem die reflektierende gekrümmte Oberfläche (9) ein mechanisches Profil hat, das aus einem diskreten Satz von reflektierenden ebenen Flächen ($S_{\Theta 0}$, $S_{\Theta 1}$, $S_{\Theta 2}$, ...) zusammengesetzt ist.

8.  Interferometer nach Anspruch 7, das Mittel (10) zur Rotation der reflektierenden ebenen Flächen ($S_{\Theta 0}$, $S_{\Theta 1}$, $S_{\Theta 2}$, ...) umfasst.

9.  Interferometer nach einem der Ansprüche 1 bis 6, bei dem das Element (E) ein dünner Spiegel (7, 8) ist, der mittels eines Verformungssystems (22) verformbar ist.

**10.** Interferometer nach Anspruch 9, bei dem das Verformungssystems (22) ein piezo-elektrisches System ist.

**11.** Interferometer nach einem der Ansprüche 7 bis 10, das ein Lasermesswerkzeug für die Kontrolle der Verschiebung, die durch die Verschiebungsmittel (10) erzeugt wird, oder der Verformung, die durch das Verformungssystem (22) erzeugt wird, umfasst.

**12.** Interferometer nach einem der Ansprüche 1 bis 3, bei dem das optische Element (E) zur Kompensation des Felds eine dünne Glasplatte (11) ist.

**13.** Interferometer nach einem der Ansprüche 1 bis 4, bei dem das Interferometer (1) zwei optische Elemente (E) zur Kompensation des Felds umfasst: eine dünne Glasplatte (11) und die Strahlteilerplatte (12), die in der fokalen Bildebene der optischen Einheit (2) angeordnet sind.

**14.** Interferometrieverfahren zur Feldkompensation in einem Interferometer (1) nach einem der Ansprüche 7, 8 oder 11, bei dem:

die optische Einheit (2) die einfallenden Lichtstrahlen (4) in Richtung der Arme (5, 6) des Interferometers lenkt, die mechanisch bewegliche optische Vorrichtung (15, 16) verschoben wird, um einen Wegunterschied zu erzeugen, und dies zwischen den aus der Teilung jedes einfallenden Strahls (4) kommenden Strahlen, deren Rekombination die Umsetzung der Interferometrie gestattet,
wobei das Verfahren **dadurch gekennzeichnet ist, dass** es den Schritt umfasst, gemäß dem:

die reflektierenden ebenen Flächen ($S_{\Theta 1}$, $S_{\Theta 2}$, ...) des Spiegels (7, 8) drehend bewegt werden, und dies gleichzeitig zur optischen Vorrichtung (15, 16) und mit einem Winkel, der den Wegunterschied kompensiert, der durch die Bewegung der optischen Vorrichtung (15, 16) erzeugt wird.

**15.** Interferometrieverfahren zur Feldkompensation in einem Interferometer (1) nach einem der Ansprüche 8 bis 10, bei dem:

die optische Einheit (2) die einfallenden Lichtstrahlen (4) in Richtung der Arme (5, 6) des Interferometers lenkt, die mechanisch bewegliche optische Vorrichtung (15, 16) verschoben wird, um einen Wegunterschied zu erzeugen, und dies zwischen den aus der Teilung jedes einfallenden Strahls (4) kommenden Strahlen, deren Rekombination die Umsetzung der Interferometrie gestattet,
wobei das Verfahren **dadurch gekennzeichnet ist, dass** es den Schritt umfasst, gemäß dem:

die Oberfläche (9) des dünnen Spiegels (7, 8) gleichzeitig zur optischen Vorrichtung (15, 16) verformt wird, und dies mit einer Strecke, die den Wegunterschied kompensiert, der durch die Bewegung der optischen Vorrichtung (15, 16) erzeugt wird.

**Claims**

**1.** A field-compensated interferometer (1), comprising:

an optical assembly (2) capable of directing incident light beams (4) having a field angle θ relative to an optical axis of the interferometer (1) into arms (5, 6) of the interferometer,
a beam splitter (12),
the arms (5, 6) comprising at least one mechanically movable optical device (15, 16) for generating a variable optical path difference between beams stemming from the separation of each incident beam (4) via said beam splitter (12),
said interferometer (1) being **characterized in that** it comprises:

at least one field compensation optical element (E), arranged in either one of the image focal planes of the optical assembly (2) conjugate relative to the beam splitter (12),
said element (E) comprising at least one curved surface (9) so as to generate a path difference between the incident beams having a non-zero field angle and the incident beams having a zero field angle, the thereby generated path difference allowing compensation for self-apodization resulting from the field angle.

2. The interferometer according to claim 1, comprising two field compensation optical elements (E) respectively arranged in each of the two image focal planes of the optical assembly (2) conjugate relative to the beam splitter (12).

3. The interferometer according to one of claims 1 or 2, wherein the surface (9) of the optical element (E) is curved on at least one of its meridians (13).

4. The interferometer according to one of claims 1 to 3, comprising two optical elements (E),

one of the elements comprising a curved surface (9) on a first meridian,
the other one of the elements comprising a curved surface (9) on a second meridian,
the first and the second meridian being orthogonal.

5. The interferometer according to one of claims 1 to 4, wherein the element (E) is a mirror (7, 8), said mirror (7, 8) comprising a reflective curved surface (9) on at least one of its meridians (13).

6. The interferometer according to claim 5, wherein the reflective curved surface (9) has a continuously curved mechanical profile.

7. The interferometer according to claim 5, wherein the reflective curved surface (9) has a mechanical profile consisting of a discrete set of reflective planar surfaces ($S_{\theta 0}$, $S_{\theta 1}$, $S_{\theta 2}$,...).

8. The interferometer according to claim 7, including means (10) for rotating the reflective planar surfaces ($S_{\theta 0}$, $S_{\theta 1}$, $S_{\theta 2}$,...).

9. The interferometer according to one of claims 1 to 6, wherein the element (E) is a thin mirror (7, 8) and deformable via a deformation system (22).

10. The interferometer according to claim 9, wherein the deformation system (22) is a piezo-electric system.

11. The interferometer according to one of claims 7 to 10, comprising a laser metrology tool for controlling the displacement generated by the means (10) for displacement or deformation generated by the deformation system (22).

12. The interferometer according to one of claims 1 to 3, wherein the field compensation optical element (E) is a thin glass plate (11).

13. The interferometer according to one of claims 1 to 4, wherein the interferometer (1) comprises two field compensation optical elements (E): a thin glass plate (11) and the beam splitter (12), arranged in the image focal plane of the optical assembly (2).

14. A field-compensated interferometry method in an interferometer (1) according to one of claims 7, 8 or 11, wherein:

the optical assembly (2) directs the incident light beams (4), into the arms (5, 6) of the interferometer,
the mechanically movable optical device (15, 16) is displaced in order to generate a path difference between the beams stemming from the separation of each incident beam (4), the recombination of which allows application of interferometry,
said method being **characterized in that** it comprises the step according to which:

the reflective planar surfaces ($S_{\theta 1}$, $S_{\theta 2}$,...) of the mirror (7, 8) are displaced in rotation is simultaneously with the optical device (15, 16) by an angle compensating the path difference generated by the displacement of said optical device (15, 16).

15. A field-compensated interferometry method in an interferometer (1) according to one of claims 8 to 10, wherein:

the optical assembly (2) directs the incident light beams (4) into the arms (5, 6) of the interferometer,
the mechanically movable optical device (15, 16) is displaced in order to generate a path difference between the beams stemming from the separation of each incident beam (4), the recombination of which allows application of interferometry,
said method being **characterized in that** it comprises the step according to which:

the surface (9) of the thin mirror (7, 8) is deformed simultaneously with the optical device (15, 16) by a distance compensating the path difference generated by the displacement of said optical device (15, 16).

## FIG. 1

## FIG. 2

## FIG. 3

## FIG. 4

## RÉFÉRENCES CITÉES DANS LA DESCRIPTION

**Documents brevets cités dans la description**

- EP 0957346 A
- US 5131747 A
- US 20030103209 A

**Littérature non-brevet citée dans la description**

- **DE MONTILLA et al.** *Michelson wide-field stellar interferometry: principles and experimental versification,* 20 Janvier 2005